# EUROPÄISCHE PATENTSCHRIFT

(11) **EP 3 022 787 B1**
(45) Veröffentlichungstag und Bekanntmachung des Hinweises auf die Patenterteilung: **27.11.2019**
(21) Anmeldenummer: 14738457.2
(22) Anmeldetag: 04.07.2014
(51) Int. Cl.: H01M 8/0239, H01M 8/0243, H01M 8/18, H01M 8/0273

(54) **VERFAHREN ZUR HERSTELLUNG EINES VERBUNDHALBZEUGS**
METHOD FOR PRODUCING A COMPOSITE SEMIFINISHED PRODUCT
PROCÉDÉ DE FABRICATION D'UN DEMI-PRODUIT COMPOSITE

(30) Priorität: 16.07.2013 DE 102013107514
(43) Veröffentlichungstag der Anmeldung: 25.05.2016
(73) Patentinhaber: Fraunhofer-Gesellschaft zur Förderung der angewandten Forschung e.V., 80686 München (DE)
(72) Erfinder: KOPIETZ, Lukas, 47198 Duisburg (DE); SEIPP, Thorsten, 45481 Mülheim a.d. Ruhr (DE); BERTHOLD, Sascha, 46045 Oberhausen (DE); BURFEIND, Jens, 46047 Oberhausen (DE); HINTEMANN, Damian, 48703 Stadtlohn (DE); WACK, Holger, 44137 Dortmund (DE)
(86) Internationale Anmeldenummer: PCT/EP2014/064303
(87) Internationale Veröffentlichungsnummer: WO 2015/007544

(56) Entgegenhaltungen:
- DE-A1- 10 243 592
- DE-A1- 10 347 701
- DE-A1-102009 051 434
- JP-A- H01 112 606
- US-A1- 2002 058 179
- US-A1- 2004 119 056
- US-A1- 2008 149 900
- US-A1- 2008 268 318
- US-A1- 2010 144 980
- US-B1- 6 180 275

## Beschreibung

Die Erfindung betrifft ein Verfahren zur Herstellung eines Verbundhalbzeugs, mit einer kontinuierlichen Phase umfassend wenigstens einen thermoplastischen Kunststoff und eine disperse Phase aus wenigstens einem elektrisch leitfähigen Füllstoff. Ferner betrifft die Erfindung eine Verwendung eines solchen Verbundhalbzeugs und eine Elektrode einer elektrochemischen Zelle, hergestellt aus einem solchen Verbundhalbzeug.

Verbundhalbzeuge der genannten Art werden insbesondere zur Herstellung von elektrisch hoch leitfähigen Bauteilen verwendet. Ein Anwendungsbereich stellen Elektroden für elektrochemische Zellen, etwa für Brennstoffzellen, Redox-Flow-Batterien oder dergleichen, dar. Für diese und andere Anwendungsgebiete ist ein hoher Anteil an Füllstoffen wünschenswert, da die Füllstoffe in vielen Fällen eine wichtige Eigenschaft des Verbundhalbzeugs bereitstellen. Hohe thermische und/oder elektrische Leitfähigkeiten werden beispielsweise durch einen hohen Anteil von Graphit erreicht, der typischerweise 70 Gew.-% des Verbundhalbzeugs und mehr beträgt. Diese hohen Füllstoffanteile bringen einige Besonderheiten bei der Herstellung der Verbundhalbzeuge mit sich.

Eine wesentliche Besonderheit besteht in der homogenen Verteilung des Füllstoffs in der Matrix des thermoplastischen Kunststoffs. Hierfür werden Extruder oder Kneter verwendet, denen der Kunststoff in Form von Pellets oder dergleichen und der Füllstoff in Form feiner Partikel zugeführt wird. Im Extruder oder Kneter wird der thermoplastische Kunststoff aufgeschmolzen und der Füllstoff mechanisch in die Kunststoffschmelze eingearbeitet. Dieser Prozess erfordert eine geringe Viskosität des Gemischs, so dass der Kunststoff weit über die eigentliche Schmelztemperatur erwärmt werden muss.

Das Compoundmaterial kann anschließend durch Spritzgießen in Form gebracht werden, wozu jedoch eine noch geringere Viskosität erforderlich ist. Der Kunststoff muss daher sehr stark erhitzt und unter einen hohen Druck gesetzt werden. Alternativ kann das Compoundmaterial auch einem Kalander zugeführt werden, der ein wiederholtes Vergleichmäßigen des Compoundmaterials durch mehrmaliges Umwälzen und Abziehen bewirkt. Der Kalandrierprozess führt zu einer langen Verweilzeit des Compoundmaterials im Kalander, das dementsprechend lange stark erwärmt werden muss.

Ein Verfahren der eingangs genannten Art zur Herstellung eines Verbundhalbzeugs, mit einer kontinuierlichen Phase umfassend wenigstens einen thermoplastischen Kunststoff und eine disperse Phase aus wenigstens einem elektrisch leitfähigen Füllstoff ist in der US 2004/0119056 A1 beschrieben, von dem die Erfindung ausgeht. In der DE 10 2009 051 434 A1 ist zudem ein Verfahren zur Herstellung eines Formkörpers aus einer hochleitfähigen Verbundformmasse beschrieben. Zudem ist aus der US 2008/0149900 A1 ein Verfahren zur Herstellung eines leitfähigen Verbundhalbzeugs in Form einer Platte für Brennstoffzellen bekannt. Im Übrigen beschreibt die JP H01 112606 A ein Verfahren zum Herstellen eines plattenförmigen Verbundhalbzeugs mithilfe eines Walzschritts.

Auf entsprechende Weise hergestellte Verbundhalbzeuge weisen nur geringe thermoplastische Eigenschaften auf, was für die weitere Verarbeitung der Verbundhalbzeuge nachteilig ist. Die Verbundhalbzeuge weisen oft geringe mechanische Festigkeiten auf und sind nur schwer mit anderen Thermoplasten zu verbinden bzw. thermisch zu verschweißen.

Daher liegt der vorliegenden Erfindung die Aufgabe zugrunde, das eingangs genannte und zuvor näher beschriebene Verfahren derart auszugestalten und weiterzuentwickeln, dass Verbundhalbzeuge mit verbesserten Materialeigenschaften erhalten werden können.

Diese Aufgabe ist nach Anspruch 1 erfindungsgemäß durch ein Verfahren der eingangs genannten Art gelöst, bei dem der wenigstens eine thermoplastische Kunststoff in Form feiner Partikel mit dem wenigstens einen Füllstoff in Form feiner Partikel vermischt wird, wobei jeweils wenigstens 90 Gew.-% der Partikel des wenigstens einen thermoplastischen Kunststoffs und des wenigstens einen Füllstoffs kleiner als 1 mm sind, bei dem die Mischung aus dem wenigstens einen thermoplastischen Kunststoff und dem wenigstens einen Füllstoff bis auf eine Temperatur größer als die Schmelztemperatur des wenigstens einen thermoplastischen Kunststoffs erwärmt wird und bei dem das erwärmte Material auf eine Temperatur unterhalb der Erstarrungstemperatur des wenigstens einen thermoplastischen Kunststoffs abgekühlt wird.

Die Erfindung hat also erkannt, dass nicht wie bislang angenommen die Partikelgröße des wenigstens einen Füllstoffs, sondern insbesondere die Partikelgröße des Kunststoffs und das Vermischen beider Komponenten vor der eigentlichen Verarbeitung der Materialien einen erheblichen Einfluss auf die Materialeigenschaften des Verbundhalbzeugs hat. Dies ist insoweit überraschend, als dass der wenigstens eine Kunststoff unabhängig von seiner ursprünglichen Partikelgröße aufgeschmolzen wird, um eine kontinuierliche Phase bzw. Matrix zu bilden, in der der Füllstoff eingebunden wird. Dabei hängt die Struktur der kontinuierlichen Phase bzw. der Matrix insbesondere von der Kettenlänge und der Kettenstruktur des verwendeten thermoplastischen Kunststoffs ab, nicht jedoch von dessen Partikelgröße.

Im Zusammenhang mit der Erfindung ist erkannt worden, dass die durch den wenigstens einen thermoplastischen Kunststoff gebildete Matrixstruktur sehr wohl von der ursprünglichen Partikelgröße der Kunststoffpartikel abhängt, und zwar indirekt. Dies wird darauf zurückgeführt, dass die Verarbeitungszeiten und die Verarbeitungstemperaturen bei der Verwendung von Kunststoffen mit sehr kleinen Partikelgrößen erfindungsgemäß deutlich gesenkt werden können, so dass keine oder nur geringe Zersetzungserscheinungen hinsichtlich des Kunststoffs bzw. dessen Matrixstruktur auftreten. Dies liegt offensichtlich nicht zuletzt an den verbesserten Wärmetransportprozessen bei Verwendung kleinerer Kunststoffpartikel und der besseren Verarbeitbarkeit der zuvor hergestellten, vorzugsweise im Wesentlichen homogenen, Mischung aus Kunststoff- und Füllstoffpartikeln. Es wird so letztlich ein Verbundmaterial erhalten, dessen Materialeigenschaften trotz der sehr hohen Füllstoffanteile, mehr den Materialeigenschaften des wenigstens einen thermoplastischen Kunststoffs ähneln als dies bei den aus dem Stand der Technik bekannten Verbundmaterialien gleicher Zusammensetzung der Fall ist, ohne die durch die Füllstoffe bereitgestellten Materialeigenschaften, insbesondere die elektrische Leitfähigkeit, nennenswert nachteilig zu beeinflussen. Es kann also mit dem erfindungsgemäßen Verfahren vorzugsweise ein thermoplastisches Verbundhalbzeug erhalten werden, das grundsätzlich wie ein reiner thermoplastischer Kunststoff oder jedenfalls in ähnlicher Weise weiterverarbeitet werden kann.

Zu diesem Zweck ist es besonders bevorzugt, wenn wenigstens 95 Gew.-%, insbesondere im Wesentlichen 100 Gew.-%, der Partikelverteilung des wenigstens einen thermoplastischen Kunststoffs kleiner sind als 1 mm. Im Übrigen kann es zur Bereitstellung einer möglichst homogenen Mischung vor der eigentlichen Verarbeitung derselben bevorzugt sein, wenn die maximalen Partikelgrößen des wenigstens einen thermoplastischen Kunststoffs und des wenigstens einen Füllstoffs im Wesentlichen gleich sind. Des Weiteren kann es bevorzugt sein, wenn die Temperatur, auf die die Mischung von wenigstens einem thermoplastischen Kunststoff und wenigstens einem elektrisch leitenden Füllstoff lediglich auf eine Temperatur erwärmt wird, die oberhalb der Schmelztemperatur aber unterhalb der Zersetzungstemperatur des wenigstens einen Kunststoffs liegt. Im Falle mehrerer thermoplastischer Kunststoffe können diese auf eine Temperatur oberhalb der höchsten Schmelztemperatur und unterhalb der niedrigsten Zersetzungstemperatur der thermoplastischen Kunststoffe gebracht werden. Im Übrigen wird die Temperatur des Materials nachträglich auf eine Temperatur abgesenkt, die unterhalb der niedrigsten Erstarrungstemperatur der verwendeten thermoplastischen Kunststoffe liegt.

Bei einer ersten bevorzugten Ausgestaltung des Verfahrens weist das Material des Füllstoffs eine elektrische Leitfähigkeit von wenigstens 1 S/m, vorzugsweise wenigstens 10³ S/m, insbesondere wenigstens 10⁶ S/m, auf. Die Schüttung aus kleinen Füllstoffpartikeln kann eine entsprechend geringere Leitfähigkeit aufweisen. So kann ein Verbundhalbzeug mit bevorzugten Eigenschaften erhalten werden. Alternativ oder zusätzlich kann die elektrische Leitfähigkeit des Verbundhalbzeugs wenigstens 1 S/m, vorzugsweise wenigstens 100 S/m, insbesondere wenigstens 1000 S/m, betragen. Grundsätzlich ist es aber bevorzugt, wenn der wenigstens eine elektrisch leitfähige Füllstoff elektrisch leitfähiger ist als der wenigstens eine thermoplastische Kunststoff, insbesondere alle thermoplastischen Kunststoffe.

Bei dem elektrisch leitfähigen Füllstoff handelt es sich vorzugsweise um Kohlenstoff, Graphit, Ruß, Titancarbid (TiC), wenigstens ein Metall und/oder wenigstens eine Metallverbindung. Diese Füllstoffe eignen sich aufgrund ihrer mechanischen Eigenschaften und ihrer Leitfähigkeit besonders gut.

Als thermoplastischer Kunststoff kommt beispielsweise ein Polyolefin, insbesondere Polyethylen (PE) und/oder Polypropylen (PP), Polyphenylensulfid (PPS), Polyetheretherketon (PEEK), Polyvinylchlorid (PVC) und/oder Polyamid (PA) in Frage. Diese Werkstoffe bieten Vorteile hinsichtlich der Verarbeitbarkeit und des Fügens der Verbundhalbzeuge. Insbesondere können die genannten Kunststoffe leicht mit anderen verschweißt werden.

Damit die gewünschten Eigenschaften des wenigstens einen Füllstoffs die Eigenschaften des Verbundhalbzeugs in hohem Maße bestimmen, ist es grundsätzlich bevorzugt, wenn der wenigstens eine Füllstoff einen hohen Anteil an dem Verbundhalbzeug bildet. Da zudem aber die Materixstruktur des wenigstens einen thermoplastischen Kunststoffs die Materialeigenschaften wesentlich beeinflusst, beträgt der Anteil des wenigstens einen Füllstoffs am Verbundhalbzeug bedarfsweise zwischen 50 Gew.-% und 95 Gew.-%, vorzugsweise zwischen 70 Gew.-% und 92 Gew.-%, insbesondere zwischen 80 Gew.-% und 90 Gew.-%.

Um die Verarbeitbarkeit des Verbundhalbzeugs zu verbessern, bietet es sich an, wenn 90 Gew.-% der Partikel des wenigstens einen thermoplastischen Kunststoffs und/oder des wenigstens einen Füllstoffs kleiner als 750 µm, vorzugsweise kleiner als 500 µm, insbesondere kleiner als 300 µm, sind. Günstige Ergebnisse wurden insbesondere bei Partikelgrößen von etwa 150 µm erzielt. Auch in diesem Zusammenhang ist es bevorzugt, wenn die vorgegebene Partikelgröße von wenigstens 95 Gew.-%, insbesondere im Wesentlichen 100 Gew.-% der entsprechenden Partikel unterschritten wird. Dabei ist jedoch zu beachten, dass geringe Mengen an Partikeln, die größer sind als der entsprechende Grenzwert, in der Regel durchaus toleriert werden können. Es bietet sich aber dennoch an, größere Partikel vorher durch Sieben oder ein anderes Trennverfahren auszusondern.

Um eine zügige und schonende Verarbeitung zu ermöglichen, wird ein Walzwerk und/oder ein Kalander zum Erwärmen und/oder Abkühlen des Materials verwendet. In diesem Zusammenhang wird unter einem Walzwerk eine Anordnung von zwei Walzen und unter einem Kalander eine Anordnung von wenigstens drei Walzen verstanden. Für zuvor beschriebenen Zweck weist das Walzwerk und/oder der Kalander wenigstens eine kühlbare Walze auf. Es kann sich aber ferner anbieten, wenn das Walzwerk und/oder der Kalander eine beheizbare Walze umfasst.

In diesem Zusammenhang kann das Verbundhalbzeug einfach und materialschonend durch einen Übergang des verarbeiteten Materials von einer wärmeren Walze mit einer geringeren Umfangsgeschwindigkeit auf eine kältere Walze mit einer höheren Umfangsgeschwindigkeit gebildet werden. Man spricht in diesem Zusammenhang auch von einem Abziehen. Dabei wird zudem insbesondere ein plattenförmiges Verbundhalbzeug hergestellt. Durch die Verwendung der Begriffe wärmer und kälter ergibt sich qualitativ die Wärmedifferenz zwischen den beiden Walzen, ohne hierzu eine quantitative Aussage zu treffen. Besonders bevorzugt ist es jedoch, wenn die wärmere Walze eine Temperatur aufweist, die oberhalb der Schmelztemperatur des wenigstens einen thermoplastischen Kunststoffs, bedarfsweise aller thermoplastischer Kunststoffe, liegt. Alternativ oder zusätzlich kann die kältere Walze eine Temperatur aufweisen, die unterhalb der Erstarrungstemperatur des wenigstens einen thermoplastischen Kunststoffs, bedarfsweise aller thermoplastischer Kunststoffe, liegt.

Das Material kann bedarfsweise auch in einer Spritzgussanlage erwärmt und abgekühlt werden. Dies erleichtert und beschleunigt gegebenenfalls die Herstellung eines Verbundhalbzeugs, insbesondere eines Verbundhalbzeugs mit einer komplizierten äußeren Form. Dabei ist es zur Vereinfachung der Verarbeitung besonders bevorzugt, dass das Erwärmen in einem Extruder und das Abkühlen in einer Spritzgussform erfolgt.

Alternativ kann das Material auch nach dem Erwärmen in eine Matrize eingebracht und mittels einer Patrize in Form gepresst werden. Dieses Verfahren wird auch als Heißpressverfahren bezeichnet. Auch auf diese Weise können leicht Verbundhalbzeuge mit einer komplizierten äußeren Form und/oder großen Abmessungen gefertigt werden. Dabei kann zum Erwärmen bedarfsweise ebenfalls ein Extruder verwendet werden.

Um eine leichte Weiterverarbeitung des Verbundhalbzeugs gewährleisten zu können, ist es grundsätzlich bevorzugt, ein plattenförmiges Verbundhalbzeug herzustellen.

Alternativ oder zusätzlich ist bevorzugt, ein Verbundhalbzeug zur Fertigung einer Elektrode einer elektrochemischen Zelle, vorzugsweise einer Redox-Flow-Batterie, einer Brennstoffzelle oder eines Elektrolyseurs, eines Bauteils eines chemikalienbeständigen Wärmeaustauschers, einer Abschirmung gegenüber hochfrequenter Strahlung, vorzugsweise in einem medizintechnischen Apparat, eines reibungsarmen Lagers oder einer Heizfolie herzustellen. Bei diesen Bauteilen können die mechanischen Eigenschaften, die hohe thermische Leitfähigkeit und/oder die hohe elektrische Leitfähigkeit gewinnbringend genutzt werden.

Die zuvor genannte Aufgabe der Erfindung ist zudem gemäß Anspruch 13 durch die Verwendung eines nach einem der Ansprüche 1 bis 12 hergestellten Verbundhalbzeugs zur Herstellung einer Elektrode einer elektrochemischen Zelle, insbesondere einer Redox-Flow-Batterie, einer Brennstoffzelle oder eines Elektrolyseurs, als Bauteil eines chemikalienbeständigen Wärmeaustauschers, als Abschirmung gegenüber hochfrequenter Strahlung, vorzugsweise in einem medizintechnischen Apparat, als reibungsarmes Lager oder als Heizfolie gelöst.

Ebenso ist diese Aufgabe gemäß Anspruch 14 gelöst durch eine Elektrode einer elektrochemischen Zelle, insbesondere einer Redox-Flow-Batterie, einer Brennstoffzelle oder eines Elektrolyseurs, als Bauteil eines chemikalienbeständigen Wärmeaustauschers, als Abschirmung gegenüber hochfrequenter Strahlung, vorzugsweise in einem medizintechnischen Apparat, als reibungsarmes Lager oder als Heizfolie, hergestellt nach dem Verfahren nach einem der Ansprüche 1 bis 12.

Die Erfindung wird nachfolgend anhand einer lediglich ein Ausführungsbeispiel darstellenden Zeichnung näher erläutert. In der Zeichnung zeigt.
- Fig. 1: den Ablauf eines erfindungsgemäßen Verfahrens in schematischer Darstellung,
- Fig. 2: einen Verarbeitungsschritt des Verfahrens gemäß Fig. 1 und
- Fig. 3: ein Bauteil, hergestellt unter Verwendung des in Fig. 1 dargestellten Verfahrens.

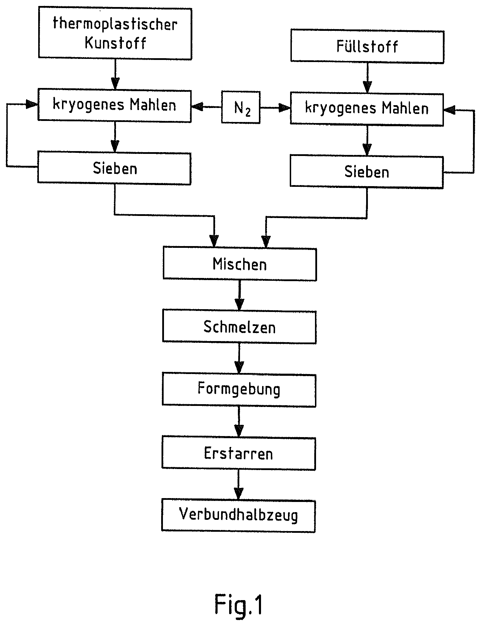

In der Fig. 1 ist schematisch ein Verfahren zur Herstellung eines Verbundhalbzeugs 1 dargestellt. Das Verbundhalbzeug 1 wird aus einer Mischung aus einem thermoplastischen Kunststoff 2 in Form von Polypropylen und einem elektrisch leitfähigen Füllstoff 3 in Form von Graphit gebildet. Der thermoplastische Kunststoff 2 wird zunächst in Form grober Partikel einem kryogenen Mahlverfahren zugeführt. Das kryogene Mahlverfahren erfolgt unter Zugabe eines Kältemittels, insbesondere in Form von flüssigem Stickstoff (N₂), um den thermoplastischen Kunststoff 2 während des Mahlvorgangs auf eine Temperatur unter wenigstens -50°C abzukühlen, damit die Sprödigkeit des thermoplastischen Kunststoffs ansteigt. Auch der Füllstoff 3 wird unter Zugabe von flüssigem Stickstoff (N₂) gemahlen. Die beschriebenen Zerkleinerungsprozesse werden in der Fig. 1 als "kryogenes Mahlen" bezeichnet. Für das Mahlen des thermoplastischen Kunststoffs 2 und des Füllstoffs 3 sind geeignete Mühlen aus dem Stand der Technik bekannt. Der thermoplastische Kunststoff 2 und/oder der Füllstoff 3 können aber auch ohne besondere Kühlung gemahlen oder ganz ohne vorheriges Mahlen verwendet werden.

Sowohl der thermoplastische Kunststoff 2 als auch der elektrisch leitfähige Füllstoff 3 werden nach dem Mahlen gemäß der in Fig. 1 als "Sieben" bezeichneten Verfahrensschritte gesiebt. Partikel größer als 150 µm werden dabei in den Mahlprozess zurückgeführt und erneut gemahlen. Die Kunststoff- und Füllstoffpartikel mit einer Größe von weniger als 150 µm werden möglichst homogen miteinander vermischt. Dazu können die aus dem Stand der Technik bekannten Mischer verwendet werden. Das Herstellen der Mischung 4 ist in der Fig. 1 als "Mischen" bezeichnet.

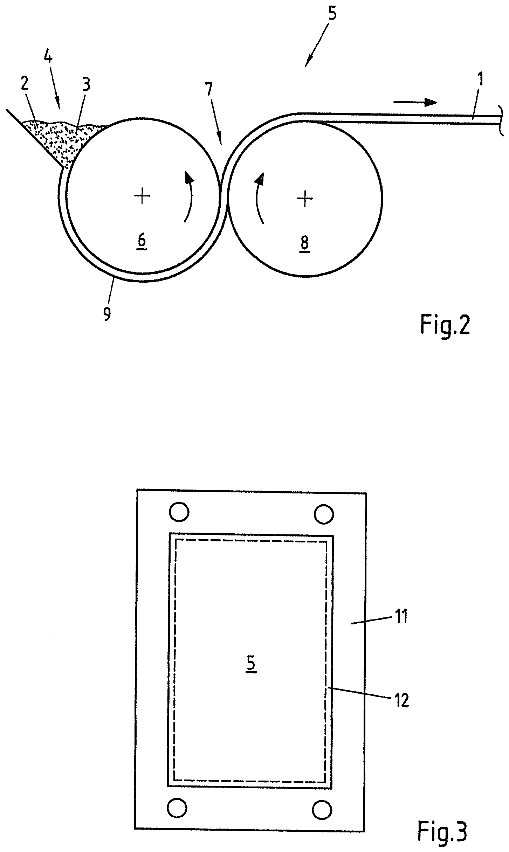

Nach dem Vermischen von thermoplastischem Kunststoff 2 und Füllstoff 3 wird die Mischung 4 an ein in der Fig. 2 dargestelltes Walzwerk 5 übergeben. Dort wird der thermoplastische Kunststoff 2 an einer temperierten Walze 6 aufgeschmolzen, was dem Verfahrensschritt "Schmelzen" gemäß Fig. 1 entspricht. Die Walzentemperatur liegt dabei etwa 30 °C über der Schmelztemperatur des thermoplastischen Kunststoffs 2. Die Partikel des Füllstoffs 3 werden beim Schmelzen des thermoplastischen Kunststoffs 2 in diesen aufgenommen. Dabei bildet der thermoplastische Kunststoff 2 eine kontinuierliche Phase in Form einer Matrix für den elektrisch leitfähigen Füllstoff 3, der als diskontinuierliche Phase, vorzugsweise homogen, in der Matrix des thermoplastischen Kunststoffs 2 verteilt aufgenommen wird. Das Material aus Füllstoff 3 und geschmolzenem thermoplastischen Kunststoff 2 haftet an der erwärmten Walze 6 an und wird daher in Drehbewegung der Walze 6 in einen Walzenspalt 7 mit einer weiteren Walze 8 transportiert. Dies stellt einen wesentlichen Teil des Verfahrensschritts "Formgebung" des Verbundhalbzeugs 1 gemäß Fig. 1 dar. Bei dem dargstellten und insoweit bevorzugten Verfahren geht der Verfahrenschritt der "Formgebung" in den Verfahrensschritt des "Erstarrens" über.

Die weitere Walze 8 ist gekühlt, so dass die Temperatur dieser Walze 8 während der Verarbeitung des Materials unterhalb der Erstarrungstemperatur des thermoplastischen Kunststoffs 2 in Form von Polypropylen liegt. Zudem weist diese Walze 8 eine größere Umfangsgeschwindigkeit als die beheizte Walze 6 auf. Somit erstarrt das Material im Walzenspalt 7 wenigstens teilweise und wird von der gekühlten Walze 8 abgezogen. Infolge des Erstarrens des Materials zum Verbundhalbzeug 1 wird dieses nur teilsweise von der gekühlten Walze 8 weitertransportiert, und zwar nur so lange bis von der gekühlten Walze 8 ein plattenförmiges Verbundhalbzeug 1 abgezogen wird.

Bedarfsweise kann der Abstand der beheizten Walze 6 und der gekühlten Walze 8 veränderlich sein. So kann beispielsweise die Breite des Walzenspalts 7 einstellbar sein. Insbesondere kann der Abstand zwischen den Walzen 6,8 anfänglich so groß gewählt werden, dass sich an der beheizten Walze 6 zunächst umlaufend eine Schicht 9 aus thermoplastischem Kunststoff 2 und elektrisch leitfähigem Füllstoff 3 bildet, der mit der Zeit weiter homogenisiert wird. Nachdem diese Schicht 9 die erforderliche Dicke und/oder Homogenität aufweist, kann die gekühlte Walze 8 an die beheizte Walze 6 herangefahren werden, um den Walzenspalt 7 zu bilden und das Verbundhalbzeug 1 wie beschrieben abzuziehen.

Infolge der im Vergleich zum Stand der Technik sehr kurzen Verarbeitungsdauer und geringen Temperaturen wird ein Verbundhalbzeug 1 erhalten, das trotz des hohen Füllstoffsanteils am Verbundhalbzeug 1 von vorliegend 85 Gew.-% erhebliche thermoplastische Eigenschaften aufweist. Dies wird bei dem in der Fig. 3 dargestellten Bauteil in Form einer Elektrode 10 für eine elektrochemische Zelle genutzt, indem die Elektrode 10 umlaufend zu ihren Rändern 11 mit einem Zellrahmenelement 12 der elektrochemischen Zelle verschweißt wird.

## Patentansprüche

1. Verfahren zur Herstellung eines Verbundhalbzeugs (1), mit einer kontinuierlichen Phase umfassend wenigstens einen thermoplastischen Kunststoff (2) und eine disperse Phase aus wenigstens einem elektrisch leitfähigen Füllstoff (3), bei dem der wenigstens eine thermoplastische Kunststoff (2) in Form feiner Partikel mit dem wenigstens einen Füllstoff (3) in Form feiner Partikel vermischt wird,, bei dem die Mischung (4) aus dem wenigstens einen thermoplastischen Kunststoff und dem wenigstens einen Füllstoff (3) bis auf eine Temperatur größer als die Schmelztemperatur des wenigstens einen thermoplastischen Kunststoffs (2) erwärmt wird und bei dem das erwärmte Material auf eine Temperatur unterhalb der Erstarrungstemperatur des wenigstens einen thermoplastischen Kunststoffs (2) abgekühlt wird,
**dadurch gekennzeichnet, dass**
vor dem Vermischen jeweils wenigstens 90 Gew.-% der Partikel des wenigstens einen thermoplastischen Kunststoffs (2) und des wenigstens einen Füllstoffs (3) kleiner als 1 mm sind und dass zum Erwärmen und/oder Abkühlen des Materials ein Walzwerk (5) und/oder ein Kalander umfassend wenigstens eine kühlbare Walze (8) verwendet wird.

2. Verfahren nach Anspruch 1,
bei dem das Material des wenigstens einen elektrisch leitfähigen Füllstoffs eine elektrische Leitfähigkeit von wenigstens 1 S/m, vorzugsweise wenigstens 10³ S/m, insbesondere wenigstens 10⁶ S/m, aufweist.

3. Verfahren nach Anspruch 1 oder 2,
bei dem als elektrisch leitfähiger Füllstoff (3), vorzugsweise Kohlenstoff, Graphit, Ruß, Titancarbid (TiC), wenigstens ein Metall und/oder wenigstens eine Metallverbindung, verwendet wird.

4. Verfahren nach einem der Ansprüche 1 bis 3,
bei dem als thermoplastischer Kunststoff (2) Polyethylen (PE), Polypropylen (PP), Polyphenylensulfid (PPS), Polyetheretherketon (PEEK), Polyvinylchlorid (PVC) und/oder Polyamid (PA) verwendet wird.

5. Verfahren nach einem der Ansprüche 1 bis 4,
beim dem der wenigstens eine Füllstoff (3) in einem Anteil zwischen 50 Gew.-% und 95 Gew.-%, vorzugsweise zwischen 70 Gew.-% und 92 Gew.-%, insbesondere zwischen 80 Gew.-% und 90 Gew.-%, bezogen auf das Verbundhalbzeug (1) verwendet wird.

6. Verfahren nach einem der Ansprüche 1 bis 5,
bei dem wenigstens ein thermoplastischer Kunststoff (2) und/oder wenigstens ein Füllstoff (3) verwendet wird, wobei 90 Gew.-% der Partikel des thermoplastischen Kunststoffs (2) und/oder des wenigstens einen Füllstoffs (3) kleiner als 500 µm, vorzugsweise kleiner als 300 µm, insbesondere kleiner als 200 µm, sind.

7. Verfahren nach einem der Ansprüche 1 bis 6,
bei dem zum Erwärmen und/oder Abkühlen des Materials ein Walzwerk (5) und/oder ein Kalander umfassend wenigstens eine beheizbare Walze (6) verwendet wird.

8. Verfahren nach Anspruch 7,
bei dem das Verbundhalbzeug durch Übergang des Materials von einer wärmeren Walze (6) mit einer geringeren Umfangsgeschwindigkeit auf eine kältere Walze (8) mit einer höheren Umfangsgeschwindigkeit gebildet wird.

9. Verfahren nach einem der Ansprüche 1 bis 6,
bei dem das Material in einer Spritzgussanlage erwärmt und abgekühlt wird, wobei vorzugsweise das Erwärmen in einem Extruder und das Abkühlen in einer Spritzgussform erfolgt.

10. Verfahren nach einem der Ansprüche 1 bis 6,
bei dem das Material nach dem Erwärmen in eine Matrize eingebracht und mittels einer Patrize in Form gepresst wird.

11. Verfahren nach einem der Ansprüche 1 bis 10,
bei dem ein plattenförmiges Verbundhalbzeug (1) hergestellt wird.

12. Verfahren nach einem der Ansprüche 1 bis 10,
bei dem ein Verbundhalbzeug (1) zur Fertigung einer Elektrode (10) einer elektrochemischen Zelle, vorzugsweise einer Redox-Flow-Batterie, einer Brennstoffzelle oder eines Elektrolyseurs, eines Bauteils eines chemikalienbeständigen Wärmeaustauschers, einer Abschirmung gegenüber hochfrequenter Strahlung, vorzugsweise in einem medizintechnischen Apparat, eines reibungsarmen Lagers oder einer Heizfolie hergestellt wird.

13. Verwendung eines nach einem der Ansprüche 1 bis 12 hergestellten Verbundhalbzeugs (1) zur Herstellung einer Elektrode (10) einer elektrochemischen Zelle, insbesondere einer Redox-Flow-Batterie, einer Brennstoffzelle oder eines Elektrolyseurs, als Bauteil eines chemikalienbeständigen Wärmeaustauschers, als Abschirmung gegenüber hochfrequenter Strahlung, vorzugsweise in einem medizintechnischen Apparat, als reibungsarmes Lager oder als Heizfolie.

## Claims

1. Method for producing a composite semifinished product (1) having a continuous phase comprising at least one thermoplastic material (2) and a disperse phase of at least one electrically conductive filler (3), in which the at least one thermoplastic material (2) in the form of fine particles is mixed with the at least one filler (3) in the form of fine particles, in which the mixture (4) of the at least one thermoplastic material and the at least one filler (3) is heated to a temperature greater than the melting temperature of the at least one thermoplastic material (2) and in which the heated material is cooled to a temperature below the solidification temperature of the at least one thermoplastic material (2),
**characterised in that**
in each case at least 90 wt.-% of the particles of the at least one thermoplastic material (2) and of the at least one filler (3) are smaller than 1 mm before mixing, and **in that** a rolling mill (5) and/or a calender comprising at least one coolable roller (8) are used for heating and/or cooling the material.

2. Method according to claim 1,
in which the material of the at least one electrically conductive filler has an electrical conductivity of at least 1 S/m, preferably at least 10³ S/m, in particular at least 10⁶ S/m.

3. Method according to claim 1 or 2,
in which preferably carbon, graphite, carbon black, titanium carbide (TiC), at least one metal and/or at least one metal compound is used as the electrically conductive filler (3).

4. Method according to any one of claims 1 to 3,
in which polyethylene (PE), polypropylene (PP), polyphenylene sulphide (PPS),
polyether ether ketone (PEEK), polyvinyl chloride (PVC) and/or polyamide (PA) is used as the thermoplastic material (2).

5. Method according to any one of claims 1 to 4,
in which the at least one filler (3) is used in a proportion of between 50 wt.-% and 95 wt.-%, preferably between 70 wt.-% and 92 wt.-%, in particular between 80 wt.-% and 90 wt.-%, based on the composite semifinished product (1).

6. Method according to any one of claims 1 to 5,
in which at least one thermoplastic material (2) and/or at least one filler (3) is used, wherein 90 wt.-% of the particles of the thermoplastic material (2) and/or of the at least one filler (3) are smaller than 500 µm, preferably smaller than 300 µm, in particular smaller than 200 µm.

7. Method according to any one of claims 1 to 6,
in which a rolling mill (5) and/or a calender comprising at least one heatable roller (6) is used for heating and/or cooling the material.

8. Method according to claim 7,
in which the composite semifinished product is formed by transferring the material from a hotter roller (6) having a lower peripheral speed to a colder roller (8) having a higher peripheral speed.

9. Method according to any one of claims 1 to 6,
in which the material is heated and cooled in an injection moulding system, wherein preferably the heating takes place in an extruder and the cooling takes place in an injection mould.

10. Method according to any one of claims 1 to 6,
in which the material is introduced into a female mould after heating and is pressed into shape by means of a male mould.

11. Method according to any one of claims 1 to 10,
in which a plate-shaped composite semifinished product (1) is produced.

12. Method according to any one of claims 1 to 10,
in which a composite semifinished product (1) is produced for manufacturing an electrode (10) of an electrochemical cell, preferably a redox flow battery, a fuel cell or an electrolyser, a component of a chemical-resistant heat exchanger, a shield against high-frequency radiation, preferably in a medical apparatus, a low-friction bearing or a heating foil.

13. Use of a composite semifinished product (1) produced according to any one of claims 1 to 12 for manufacturing an electrode (10) of an electrochemical cell, in particular a redox flow battery, a fuel cell or an electrolyser, as a component of a chemical-resistant heat exchanger, as a shield against high-frequency radiation, preferably in a medical apparatus, as a low-friction bearing or as a heating foil.

## Revendications

1. Procédé de fabrication d'un demi-produit composite (1), comprenant une phase continue comportant au moins une matière thermoplastique (2) et une phase dispersée en au moins une matière de remplissage (3) conductrice d'électricité, avec lequel l'au moins une matière thermoplastique (2) sous la forme de particules fines est mélangée à l'au moins une matière de remplissage (3) sous la forme de particules fines, avec lequel le mélange (4) composé de l'au moins une matière thermoplastique (2) et de l'au moins une matière de remplissage (3) est chauffé jusqu'à une température supérieure à la température de fusion de l'au moins une matière thermoplastique (2) et avec lequel la matière chauffée est refroidie à une température inférieure à la température de solidification de l'au moins une matière thermoplastique (2),
**caractérisé en ce que**
avant le mélange, au moins 90 % en masse des particules de l'au moins une matière thermoplastique (2) et de l'au moins une matière de remplissage (3) sont respectivement inférieures à 1 mm et **en ce qu'**un laminoir (5) et/ou une calandre comportant au moins un cylindre (8) refroidissable est utilisé pour le chauffage et/ou le refroidissement de la matière.

2. Procédé selon la revendication 1, avec lequel la matière de l'au moins une matière de remplissage conductrice d'électricité présente une conductivité électrique d'au moins 1 S/m, de préférence d'au moins 10³ S/m, notamment d'au moins 10⁶ S/m.

3. Procédé selon la revendication 1 ou 2, avec lequel la matière de remplissage conductrice d'électricité (3) utilisée est de préférence du carbone, du graphite, du noir de carbone, du carbure de titane (TiC), au moins un métal et/ou au moins un composé de métaux.

4. Procédé selon l'une des revendications 1 à 3, avec lequel la matière thermoplastique (2) utilisée est du polyéthylène (PE), du polypropylène (PP), du polysulfure de phénylène (PPS), du polyétheréthercétone (PEEK), du polychlorure de vinyle (PVC) et/ou du polyamide (PA).

5. Procédé selon l'une des revendications 1 à 4, avec lequel l'au moins une matière de remplissage (3) est utilisée dans une proportion comprise entre 50 % en masse et 95 % en masse, de préférence entre 70 % en masse et 92 % en masse, notamment entre 80 % en masse et 90 % en masse, par rapport au demi-produit composite (1).

6. Procédé selon l'une des revendications 1 à 5, avec lequel au moins une matière thermoplastique (2) et/ou au moins une matière de remplissage (3) est utilisée, 90 % en masse des particules de la matière thermoplastique (2) et/ou de l'au moins une matière de remplissage (3) étant inférieures à 500 µm, de préférence inférieures à 300 µm, notamment inférieures à 200 µm.

7. Procédé selon l'une des revendications 1 à 6, avec lequel un laminoir (5) et/ou une calandre comportant au moins un cylindre (6) chauffant est utilisé pour le chauffage et/ou le refroidissement de la matière.

8. Procédé selon la revendication 7, avec lequel le demi-produit composite est formé par transfert de la matière d'un cylindre plus chaud (6) ayant une vitesse circonférentielle plus faible sur un cylindre plus froid (8) ayant une vitesse circonférentielle plus élevée.

9. Procédé selon l'une des revendications 1 à 6, avec lequel la matière est chauffée et refroidie dans une installation de moulage par injection, le chauffage s'effectuant de préférence dans une extrudeuse et le refroidissement dans un moule de moulage par injection.

10. Procédé selon l'une des revendications 1 à 6, avec lequel la matière est introduite dans une matrice après le chauffage, puis comprimée en forme au moyen d'un poinçon.

11. Procédé selon l'une des revendications 1 à 10, avec lequel est fabriqué un demi-produit composite (1) en forme de plaque.

12. Procédé selon l'une des revendications 1 à 10, avec lequel est fabriqué un demi-produit composite (1) destiné à produire une électrode (10) d'une cellule électrochimique, de préférence d'une batterie à flux redox, d'une pile à combustible ou d'un électrolyseur, d'un élément structural d'un échangeur de chaleur résistant aux produits chimiques, d'un blindage contre le rayonnement à haute fréquence, de préférence dans un appareil médical, d'un palier à faible frottement ou d'un film chauffant.

13. Utilisation d'un demi-produit composite (1) fabriqué selon l'une des revendications 1 à 12 pour la fabrication d'une électrode (10) d'une cellule électrochimique, notamment d'une batterie à flux redox, d'une pile à combustible ou d'un électrolyseur, en tant qu'élément structural d'un échangeur de chaleur résistant aux produits chimiques, en tant que blindage contre le rayonnement à haute fréquence, de préférence dans un appareil médical, en tant que palier à faible frottement ou en tant que film chauffant.
